# FASCICULE DE BREVET EUROPEEN

(11) **EP 0 546 894 B1**
(45) Date de publication et mention de la délivrance du brevet: **07.07.1999**
(21) Numéro de dépôt: 92403255.0
(22) Date de dépôt: 02.12.1992
(51) Int. Cl.: G06F 9/44

(54) **Procédé de modélisation conceptuelle d'expertise sur un système informatique**
Verfahren zum konzeptuellen Modellieren eines Expertensystems auf einem Computer
Method for the conceptual modelling of an expert system on a computer

(30) Priorité: 06.12.1991 FR 9115177
(43) Date de publication de la demande: 16.06.1993
(73) Titulaire: BULL S.A., 78430 Louveciennes (FR)
(72) Inventeur: Maesano, Libero, F-75010 Paris (FR); Marquet, Jean-Baptiste, 3, la brafougne, F-13920 St Mitre les Remparts (FR); Rabaux, Eric, F-75017 Paris (FR)
(74) Mandataire: Colombe, Michel

(56) Documents cités:
- FR-A- 2 607 284
- PROCEEDINGS. THE SECOND INTERN. CONFERENCE ON INDUSTRIAL AND ENGINEERING APPLICATIONS OF ARTIFICIAL INTELLIGENCE AND EXPERT SYSTEMS vol. 2, 9 Juin 1989, TULLAHOMA, TN, USA pages 154 - 160 ABU-HAKIMA ET AL. 'Jet Engine Technical Advisor (JETA)' Chapter 3. Explicit Knowledge Representation
- IEEE SOFTWARE. vol. 6, no. 6, Novembre 1989, LOS ALAMITOS US pages 44 - 52 CHERUBINI ET AL. 'An Integrated Expert-System Builder'
- IEEE CONFERENCE PROCEEDINGS. TOOLS FOR ARTIFICIAL INTELLIGENCE 90 9 Novembre 1990, HERNDON, VA, USA pages 864 - 870 MYLOPOULOS ET AL. 'KNOWBEL: A Hybrid Expert System Building Tool'

## Description

La présente invention concerne un procédé et un outil de modélisation conceptuelle d'expertise sur un système informatique.

Il est connu de nombreux outils de modélisation conceptuelle sur un système informatique.

Ainsi, il est connu par le brevet européen EP-A-314 594 un outil de dessins conceptuels qui met en oeuvre une approche fonctionnelle de haut en bas du développement du produit hardware. Cet outil comporte un système d'interrogation qui permet à l'utilisateur de rentrer chaque composant d'un produit. Un tel système nécessite une description préalable des composants du produit et par conséquent est figé pour une seule application.

Le document FR-A-2 607 284 enseigne, quant à lui, un système de base connaissance comprenant un ordinateur programmé, des moyens de mémorisation d'une base de connaissance qui comprend à la fois des données et des règles reliant les données entre elles pour créer des hypothèses. Le système du document FR-A-2 607 284 comporte un dispositif d'affichage permettant de visualiser les inter-relations existant entre les données et les hypothèses telles qu'elles sont emmagasinées dans les moyens de mémorisation ainsi qu'un dispositif permettant d'entrer les informations fournies par l'utilisateur et permettant à l'utilisateur du système d'entrer des données, des règles et de modifier ces données ou règles emmagasinées dans les moyens de mémorisation. Le système du document FR-A-2 607 284 comporte, par ailleurs, des moyens permettant l'affichage interactif des inter-relations existant entre les éléments de la base de connaissance, de manière visuelle et interactive avec les modifications réalisées par l'utilisateur.

Cependant, ce document FR-A-2 607 284 s'apparente à une méthodologie graphique permettant d'afficher automatiquement les différents liens existant entre les éléments de connaissance ou règles, ceci indépendamment de la nature du problème à résoudre. Ainsi, le document FR-A-2 607 284 remplace le travail manuel de mise en liaison des règles entre elles par un procédé automatique.

Le document "PROCEEDING, the second international conference on industrial and engineering applications of artificial intelligence and expert systems" du 9 juin 1989, "Jet Engine Technical Advisor" (JETA) décrit, aux pages 154 à 160 du volume 2, un outil généralisé de base de connaissance de diagnostic et appliqué à la maintenance des moteurs d'avion. Ce document enseigne d'utiliser les techniques de l'intelligence artificielle pour rendre compte des problèmes complexes posés par la représentation du fonctionnement du moteur. L'utilisateur de ce système dialogue au moyen d'une interface graphique qui présente des définitions, un glossaire d'informations, des explications de suites de raisonnement. Un glossaire est associé à chaque objet de type symptôme ou règle du modèle pour renseigner l'utilisateur sur le fonctionnement du moteur en lui précisant la signification de certains termes.

Ce document permet de clarifier certains termes pour l'utilisateur mais ne permet pas la constitution d'un glossaire.

Le document IEEE SOFTWARE vol.6, no. 6 nov 1989 enseigne, aux pages 44-52, les fondements de la méthode utilisée pour créer des applications de type "système expert". Ce document propose l'emploi de cadres types pour décrire les objets conceptuels et les classes d'objets, auxquels sont associés des attributs et des opérateurs. Ce document évoque des moyens de visualisation permettant de créer une structure arborescente de "vues" liées les unes aux autres, chaque "vue" héritant des informations de sa "vue-parente". Les liens père-fils ne fonctionnent que dans un sens et ceci à condition que la relation père fils ait été déclarée.

Le document IEE CONFERENCE PROCEEDINGS, TOOLS FOR ARTIFICIAL INTELLIGENCE 90 (9 novembre 1990) enseigne, aux pages 864 à 870, un outil de construction de systèmes experts basés sur le langage de représentation des connaissances TELOS et comprenant une interface à base de fenêtres.

Cependant, ce document concerne essentiellement les caractéristiques du langage TELOS qui offre des moyens de structuration d'une base de connaissance et un sous-langage d'assertions pour exprimer des règles de déduction et des contraintes d'intégrité.

Il est également connu par la demande de brevet US-A-4,964,063, une méthode de fonctionnement d'un système de traitement de données faisant intervenir des structures conceptuelles qui peuvent être utilisées pour représenter toutes connaissances représentables par des éléments tels que des données de concept, des données de relation, des bits de calcul de fonction, des bits de fonction de représentation de connaissance, des bits de codes d'accès symboliques. Les bits de code d'accès symboliques représentent les adresses de stockage des moyens de mémoire pour les données conceptuelles attachées, les données de relation et les bits codes de fonctions.

Cette méthode utilise le système de traitement de données pour relier les données de concept et les données de relation en graphes conceptuels qui sont représentables sur les moyens d'affichage.

Cette méthode prévoit une répartition en nom d'unités, en nom de traces (Slot) en nom d'aspects (facet) et en classes ou super-classes. Une telle méthode si elle permet une description de certains objets du modèle conceptuel ne prévoit pas une structure du modèle qui constitue un guide pour le recueil et l'interprétation des connaissances, tout en permettant la recherche de la modularité, de la réutilisabilité et la généricité des éléments du modèle. La généricité d'un modèle ou des parties d'un modèle étant la propriété de fournir un guide au processus de recueil et d'interprétation des connaissances, tel que le processus se réduit à "instancier" le modèle générique à savoir à y ajouter les informations factuelles propres au domaine d'application.

Un premier but de l'invention est de résoudre les problèmes ci-dessus.

Ce but est atteint par le fait que le procédé revendiqué de modélisation conceptuel d'expertise sur un système informatique pourvu d'une unité centrale, d'une mémoire centrale et d'un dispositif d'affichage travaillant en mode graphique multi-fenêtres, chaque fenêtre étant munie d'un système de coordonnées locales et d'un moyen de pointer dans une fenêtre au moins une zone active susceptible de réagir à au moins une unité d'information constituée par un événement extérieur, la dite zone active étant associée à un ensemble de premières fonctions appelées éditeurs comportant au moins une deuxième fonction de réaction à une activation, le procédé étant caractérisé en ce qu'il consiste à associer au moins une fenêtre à un nombre prédéfini d'objets conceptuels constitutifs d'un corpus de connaissance organisé sur quatres couches de modélisation de l'expertise, à savoir une première couche stratégie, une seconde couche tâche, une troisième couche inférence et une quatrième couche domaine, chaque fenêtre permettant l'affichage, l'édition et la sauvegarde de connexions entre ces objets conceptuels et permettant la mise à jour des liens des objets conceptuels par la mise à jour ou la modification d'un objet conceptuel.

Selon une autre particularité, les objets conceptuels sont constitués de relations, concepts, constantes, opérateurs, rôles, structures d'inférence, tâches, buts.

Selon une autre particularité, le procédé comporte une étape de commande de l'affichage d'une fenêtre de création d'un glossaire qui sert à définir par la suite les objets à décrire.

Selon une autre particularité, la création du glossaire comporte les étapes suivantes :
- affichage d'une fenêtre glossaire et d'une fenêtre base de données hiérarchisées dans laquelle les connaissances documentées rentrées en mémoire sont affichées,
- sélection de l'option créer un mot, mise en surbrillance d'un fragment de texte sélectionné dans la fenêtre associée à un texte de la base de données hiérarchisée, en vue du transfert vers le glossaire,
- transfert du mot vers le glossaire par sélection d'une flèche de transfert,
- édition des liens entre le glossaire et les connaissances documentées.

Selon une autre particularité, chaque fenêtre comporte comme zone active un pavé "plus" permettant d'étendre le nombre de champs d'informations présentés sur la fenêtre.

Selon une autre particularité, le procédé comporte, pour chaque fenêtre, une étape d'affichage d'un champ indiquant les liens d'un objet avec les autres objets., et permettant la création des liens d'un objet avec les autres objets.

Selon une autre particularité, chaque fenêtre comporte comme zone active un pavé "moins" permettant de restreindre la dimension de la fenêtre et les informations affichées dans celle-ci aux informations essentielles.

Selon une autre particularité, les objets conceptuels de la couche domaine sont constitués de concepts, relations et fonctions et sont référencés par les couches inférence, tâche et stratégie.

Selon une autre particularité, les objets conceptuels de la couche inférence sont constitués de structures d'inférences, d'opérateurs et de rôles.

Selon une autre particularité, les objets conceptuels de la couche tâche sont constitués de procédures.

Selon une autre particularité, les objets conceptuels de la couche stratégie sont constitués de buts.

D'autres caractéristiques et avantages de l'invention apparaitront plus clairement à la lecture de la description ci-après faite en référence aux figures, dans lesquelles :
La figure 1 représente une structure du modèle d'expertise;
La figure 2 représente un graphe du type ET/OU de la couche stratégie et de la couche tâche ;
La figure 3 représente une structure d'inférence ;
La figure 4 représente les différentes fenêtres manipulées par le système et associées à chaque éditeur d'objet ;
La figure 5 représente les fenêtres de base pour chacune des couches du corpus de connaissance ;
La figure 6 représente les fenêtres permettant d'accéder à chacune des fonctions du logiciel ou au modèle conceptuel.

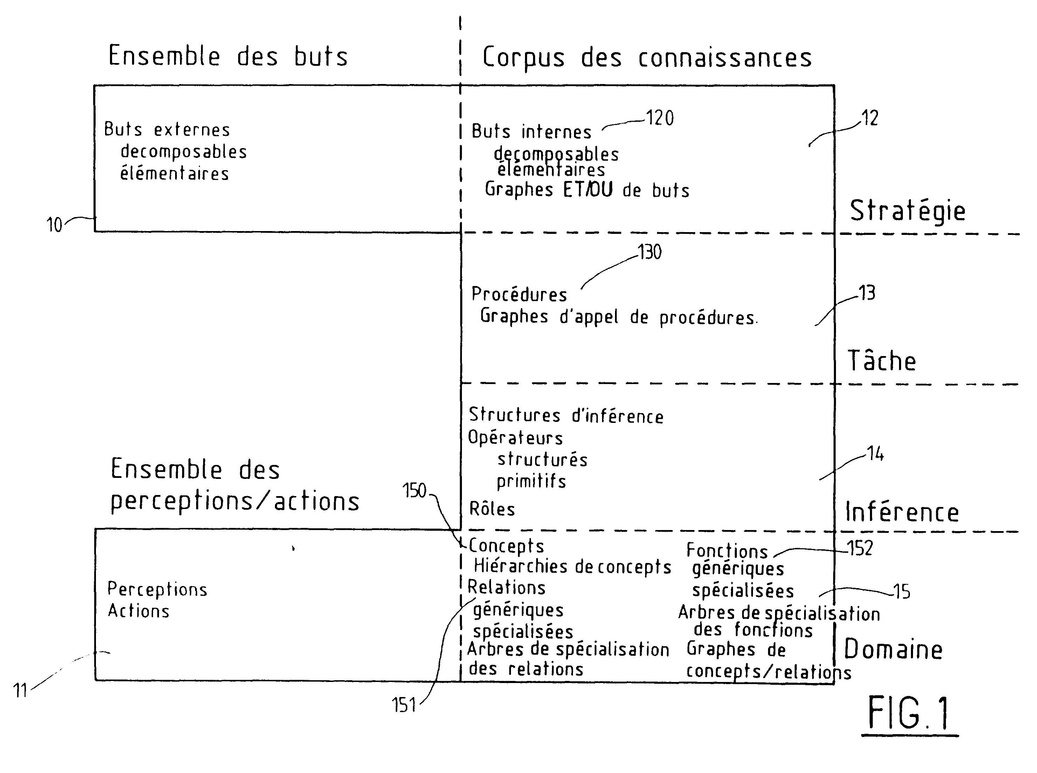

Avant de passer à la description détaillée du procédé selon l'invention, nous allons préciser le système informatique sur lequel l'invention est mise en oeuvre, ce système comporte une unité centrale, une mémoire centrale, un dispositif d'affichage travaillant en mode graphique multi-fenêtres et un moyen de pointer dans une fenêtre au moins une zone active susceptible de réagir à au moins une unité d'information constituée par un événement extérieur. Ce moyen peut être avantageusement constitué par exemple par une souris dont le bouton de gauche est affecté par convention aux sélections de zones d'objets graphiques à l'écran et aux appels des éditeurs de l'invention, le bouton de droite étant affecté à des opérations spécifiques telles que la manipulation de certains menus. Les événements extérieurs provenant de la souris sont traités par l'interface souris préprogrammée susceptible en outre de reconnaître l'appui (down), le relâchement (up) d'un bouton, la traîne (drag) de la souris et les événements logiques tels que l'entrée du pointeur souris dans la fenêtre. A l'écran la position du pointeur de la souris est repérée par une petite flèche dirigée vers le haut. Bien entendu, sans sortir du cadre de l'invention, la souris pourrait être remplacée par tout autre dispositif de pointage, tel qu'un crayon optique ou une table graphique. L'invention comporte en outre un programme gestionnaire de modèle à quatre niveaux, qui permet de créer, de sauver, de modifier, d'imprimer sous format papier ces modèles. Ce logiciel fonctionne dans un environnement multi-fenêtres et avant de décrire chaque fenêtre associée à un objet du modèle conceptuel, nous allons décrire la structure du modèle conceptuel qui est constitué, comme représenté à la figure 1, d'un ensemble de buts, d'un ensemble de perceptions/actions et d'un corpus de connaissance.

L'ensemble des buts (10) est constitué des buts externes, qui sont décomposables et élémentaires. Les buts décrivent les objectifs opérationnels de la tâche experte à automatiser. Ils sont des propositions sur l'état et le devenir de l'environnement dans lequel l'agent rationnel agit.

L'agent rationnel désigne le type de système décrit au niveau des connaissances. Le modèle conceptuel de l'expertise décrit les trois composants d'un agent rationnel qui sont, l'ensemble de perceptions/actions, l'ensemble des buts et le corpus de connaissance.

Les buts rangés explicitement dans cet ensemble (10) sont des buts externes, par opposition à d'autres buts (buts internes) qui sont définis directement dans la couche stratégie du corpus de connaissance.

L'ensemble de perceptions/actions (11) décrit les moyens d'intéraction avec l'environnement disponible pour l'accomplissement de la tâche experte à automatiser. Les perceptions sont caractérisées par les types d'objets perçus, voir ci-dessous. Les actions sont caractérisées par l'objet de l'action et par la fonction qui décrit la transformation effectuée par l'action.

Le corpus de connaissance est structuré en quatre couches, une couche stratégie (12), une couche tâche (13), une couche inférence (14), une couche domaine (15). La couche domaine (15) contient les objets conceptuels utilisés pour décrire les entités du domaine d'application, les relations et les fonctions entre ces entités ainsi que leurs propriétés. Les objets conceptuels du niveau domaine sont référencés par toutes les autres couches (inférence, tâche, stratégie). Ces objets sont les concepts (150), les relations (151) et les fonctions (152).

Un concept (150) décrit une classe d'entité concrète ou abstraite. Une entité concrète est directement liée à une perception ou action. La liste des concepts concrets issue de la liste des perceptions/actions limite la portée opérationnelle de l'expertise à modéliser. L'entité abstraite n'est pas directement concernée par une perception ou action. Les concepts abstraits sont issus des abstractions produites dans le processus constructif d'interprétation et de modélisation du raisonnement. Les concepts sont rangés dans une hiérarchie de spécialisation ainsi le concept "perte de niveau" dans une application appartient à la hiérarchie de spécialisation "anomalie" de cette application.

En annexe 1, on trouvera les différents concepts liés à la modélisation d'un système expert d'aide à la vente de produits d'agence de voyage.

Une relation (151) est un prédicat n-aire. Ce prédicat dénote une relation au sens mathématique, c'est à dire un ensemble de n-ple. Les relations portent sur les objets et sur les relations elle-mêmes. (les objets participant à un n-ple peuvent être aussi des n-ples). Une relation, par exemple "Proche" (21, annexe 2), possède une liste de champs, par exemple (Voyage,Date) éventuellement nommés avec des noms à portée locale pour la relation et caractérisés par des concepts ou des relations et éventuellement une description sous forme d'ensemble de clauses. Une relation peut être spécialisée. Une relation spécialisée a la même arité et les mêmes nombres de champs que la relation qu'elle spécialise (appelée sa relation générique). Les types de champs doivent être des spécialisations (sous concepts ou relations spécialisées) des types de champs de sa relation générique.

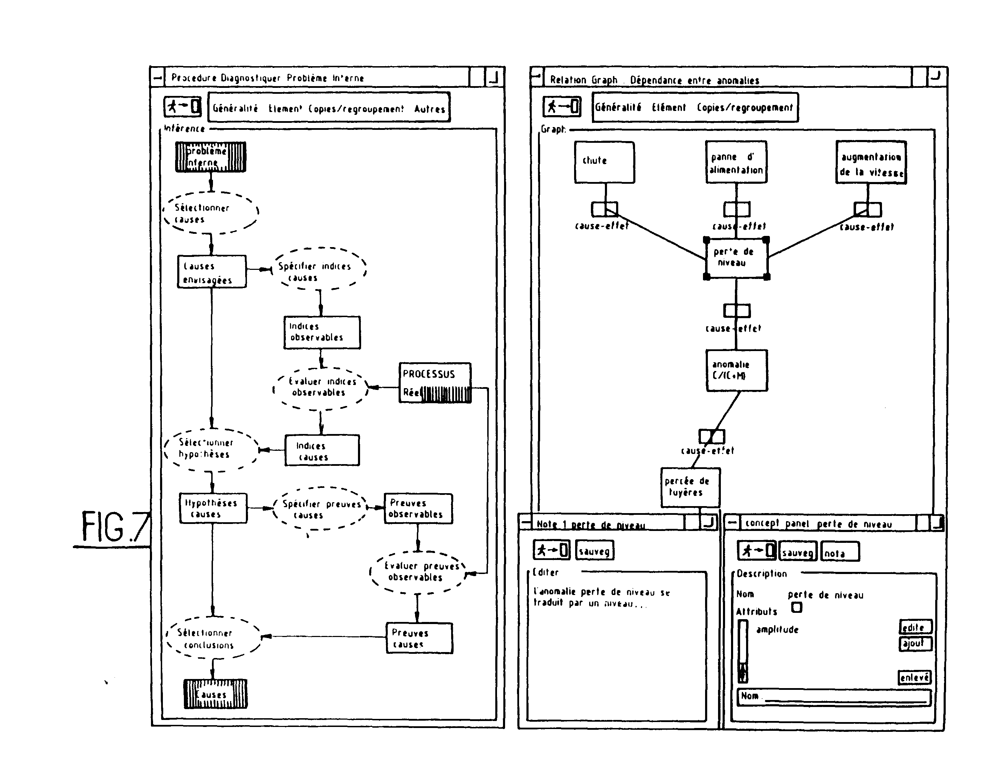

L'annexe 2 représente les différentes relations entre les concepts de l'annexe 1 par exemple la relation "compatible" spécialisée pour le concept "produit" et l'attribut "budget" du concept "contrainte". Le mécanisme de spécialisation des relations facilite l'économie des noms et le partage des propriétés. Ainsi, pour certaines applications, (représentées figure 7), il peut être intéressant de définir une relation cause-effet, entre instances d "anomalie" qui représente un dysfonctionnement hypothétique ou réel avec ses caractéristiques et son occurrence temporelle, en tant que relation générique.

En réalité chaque sous concept d'anomalie (chute, panne d'alimentation, augmentation de la vitesse,etc..) peut concourir à une relation de type cause-effet avec d'autres sous concepts. En fait, pour chaque couple d'anomalies qui est en relation cause-effet, il faut indiquer les conditions qui font que la relation s'établit réellement. Chacun de ces couples définit donc une relation qui est en fait une spécialisation de la relation générique cause-effet dans le sens qu'elle hérite d'un certain nombre de ces propriétés (syntaxique, comme son nom, son arité, les noms des champs et sémantique comme par exemple la propriété que dans la théorie de la causalité choisie, la cause précède toujours temporellement l'effet). Chaque relation spécialisée possède une description qui prend en compte exactement les conditions d'établissement d'une telle relation pour le couple d'anomalie en question. Ces informations sont documentées de la façon suivante :
relation
nom-relation : cause-effet
champs : [<cause,anomalie>,<effet,anomalie>]
description :
{cause-effet (x,y) <-précède(intervalle(x),intervalle(y))}
relation-spécialisée
relation-générique : cause-effet
types-de-champs : [<cause, panne-de-chargement> ,
<effet,perte-de-niveau>]
description : .....
relation-spécialisée
relation-générique : cause-effet
champs : [<cause, chute>,<effet,perte-de-niveau>]
description : .....

Un graphe représentant la relation cause-effet entre anomalie de fonctionnement d'un processus est présenté sur la fenêtre de droite de la figure 7.

Une fonction (152) est une application au sens mathématique du terme (notamment, à chaque n-ple de valeur des arguments correspond une image unique). A chaque fonction n-aire correspond une relation (n+1)-aire (dans laquelle le résultat est le champ (n+1)-me). Une fonction peut avoir une visibilité relationnelle (l'inverse n'est pas vrai): (x,y,z)(F(x,y) = z<=> F(x,y,z))

Une fonction possède une liste d'arguments qui ont éventuellement des noms de portée locale et des types qui sont des concepts et éventuellement une description au moyen d'un langage d'expressions fonctionnelles proche du langage couramment employé dans les textes scolaires de mathématique.

Un exemple de fonction est représenté à l'annexe 3 par la référence (1520).

Les fonctions, au même titre que les relations, peuvent être spécialisées. Une fonction spécialisée hérite le nom et la liste des arguments de la fonction qu'elle spécialise (sa fonction générique), les types des arguments et du résultat étant des sous-concepts des types de sa fonction générique ; sa description aussi peut-être spécialisée. un exemple de fonction spécialisée est représentée ci-dessous :
fonction-spécialisée
fonction-générique : Plus
types-arguments : <Entier, Entier>
type-résultat : Entier
description :
{Plus(x,0) = x,
Plus (x,Succ(y)) = Succ (Plus(x,y))}

La fonction "Plus" appliquée aux entiers a une définition spécialisée par rapport à celle plus générique, définie pour les nombres. La description est donnée en termes d'équations fonctionnelles. Il s'agit d'une définition constructive à partir de la fonction "Succ", définie par ailleurs.

Les concepts peuvent être dotés d'attributs. Un attribut d'un concept n'est rien d'autre qu'une fonction unaire dont l'argument est typé par le concept et le nom a une portée locale au concept. Les attributs sont hérités dans la hiérarchie de spécialisation.
attribut : =
nom-attribut
type-résultat
description
nom-attribut : = symbole
type-résultat: = concept
description : = (une description du même type de celle des fonctions..)

Les attributs hérités peuvent être spécialisés par deux moyens : la spécialisation du type de résultat et une nouvelle description.

Le choix de définir une fonction unaire comme un attribut et non comme une fonction est une question d'appréciation, en sachant qu'un attribut porte une information liée localement à un concept (et à ses sous-concepts).

La couche inférence (14) décrit les transformations des objets conceptuels de la couche domaine dictées par les pas d'inférences et les graphes de flux d'informations dans lesquels ces transformations sont inscrites.

Les objets conceptuels de la couche inférence sont les structures d'inférences, les opérateurs et les rôles.

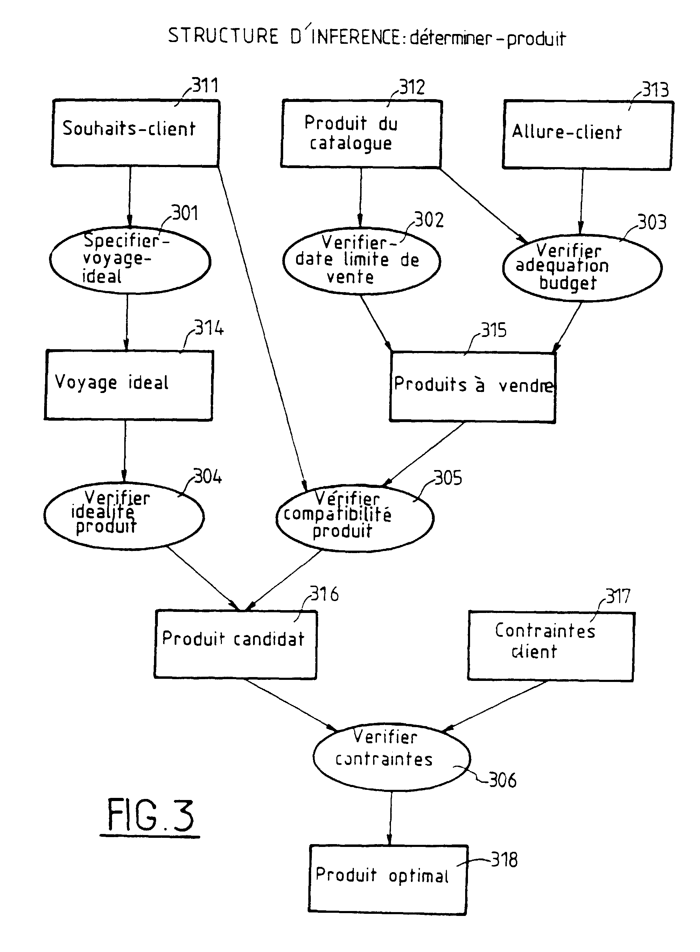

Les structures d'inférences décrivent les graphes de flux (réprésentés à la figure 3) d'informations entre opérateurs (301 à 306) et les rôles (311 à 318). Ces structures d'inférences ne véhiculent aucune information sur les séquences d'application des opérateurs, mais mettent en évidence seulement les contraintes imposées par le graphe de flux. Les structures d'inférences ont une représentation graphique spécifique. Un exemple est présenté dans la fenêtre de gauche de la figure 7. Les opérateurs (knowledge sources) décrivent les relations d'inférences entre instances de concepts et relations (une instance d'un concept est un objet appartenant à la classe définie par le concept et une instance d'une relation,n-aire est une n-ple appartenant à l'extension de la relation). Un opérateur "consomme" et "produit" des instances de concepts et de relations. Les opérateurs peuvent être primitifs ou structurés.

Un opérateur structuré possède une liste d'opérandes et un résultat. Les opérandes et le résultat sont appelés rôles. Sa description est donnée par une structure d'inférence qui a comme propriété particulière que le seul noeud sans successeur est le résultat de l'opérateur structuré décrit et les seuls noeuds sans prédécesseur sont les opérandes de l'opérateur. Les opérateurs qui apparaissent dans la structure d'inférence peuvent être à leur tour primitifs ou structurés.

Un opérateur primitif permet de décrire une transformation "élémentaire" qu'il n'est plus intéressant de décomposer au moyen d'une structure d'inférence. La nature de la description d'un opérateur primitif est encore un sujet de discussion. Il est notamment question de savoir s'il faut décrire la relation d'inférence correspondante par ses propriétés abstraites (les propriétés des opérandes et du résultat), ou de façon constructive, en indiquant les mécanismes de calcul qui réalisent la transformation. Ces mécanismes peuvent être décrits soit dans un langage algorithmique, soit au moyen d'un ensemble de règles de production, soit dans d'autres formalismes.

Les rôles (38) des exemples d'opérateurs primitifs explicités en annexe 5, sont donnés en annexe 4. Ces rôles sont les opérandes et les résultats des opérateurs. Un rôle possède un nom et une liste de concepts ou de relations du domaine qui jouent les 'rôles" de type des opérandes et des résultats des opérateurs.

La couche tâche (13) décrit un premier niveau de contrôle des inférences. En fait, la couche tâche décrit le graphe de contrôle des opérateurs primitifs définis dans la couche inférence qui contient la description de leur graphe de flux.

Ce graphe de contrôle est décrit au moyen des objets conceptuels de la couche tâche qui sont les procédures (aussi appelées tâches et méthodes). Les procédures sont des "programmes" écrits dans un langage impératif/procédural non typé, qui appliquent les opérateurs primitifs définis dans la couche inférence aux instances de concepts et relations.

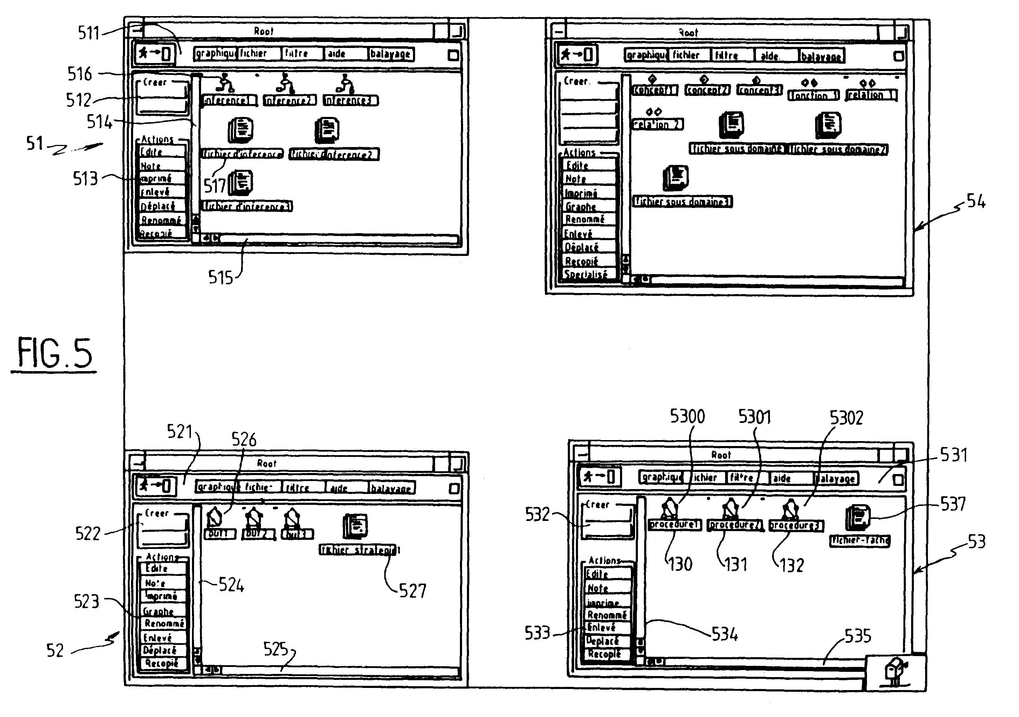

La procédure "présenter-produits-adaptés" de l'annexe 6 inscrit les opérateurs contenus dans la structure d'inférence "déterminer-produit" de la figure 3 dans un graphe de contrôle qui est représenté par la référence 5301 sur la fenêtre procédure 53 de la figure 5.

La plupart des modèles développés aujourd'hui ont comme objet des applications relativement simples, dans lesquelles une description fine dans la couche stratégie est redondante. Dans de tels cas, on peut décrire le comportement "général" de l'agent de façon entièrement procédurale. Ceci a provoqué la remise en discussion de l'existence même de la couche stratégie (12). Toutefois dans des applications d'envergure, mettant en jeu plusieurs "tâches" expertes (surveillance, diagnostic, planification) et l'utilisation contextuelle des connaissances, la couche stratégie (12) est un composant essentiel du modèle d'expertise.

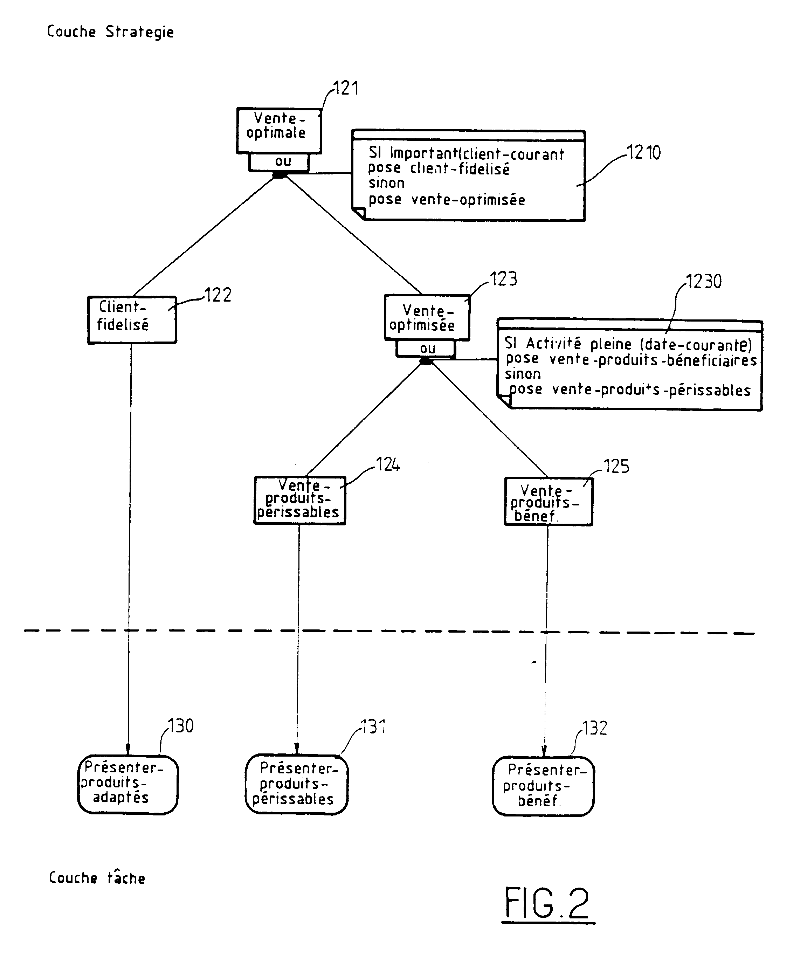

Les objets conceptuels du niveau stratégie sont les buts internes (120). Les buts externes, sont ceux qui sont définis au niveau du composant ensemble des buts de l'agent rationnel. Dans la couche stratégie, ces buts sont rangés dans un graphe (figure 2) de décomposition des buts. D'autres buts (les buts internes) sont issus de la décomposition "exporter" des buts en sous-buts et sont définis directement dans la couche stratégie du corpus de connaissances.

Les buts sont des propositions sur l'état et le devenir de l'environnement dans lequel l'agent rationnel évolue. Les états et l'évolution de l'environnement peuvent et doivent, pour des raisons de synthèse et de visibilité globale être exprimés de façon abstraite (pas simplement comme des configurations de valeurs des perceptions dans le temps). Cette représentation abstraite doit pouvoir être toujours ramenée à une représentation concrète. A partir d'un état concret, à savoir une configuration des valeurs des perceptions, on doit pouvoir déterminer de façon non ambiguë l'état abstrait correspondant.

Les objets conceptuels de la couche stratégie (12) (qu'ils soient externes ou internes (120)) se distinguent en buts décomposables et buts élémentaires.

Un but décomposable (121 ou 123, figure 2) est un noeud intermédiaire du graphe des buts ; il possède un type (ET/OU) une liste de sous-buts (124,125) et il peut être annoté par un ensemble de règles de choix (1210,1230) entre sous-buts (but OU) ou de relaxation de sous-buts (but ET). Ces règles permettent de choisir le sous-but à poser (noeud OU) ou le sous-but à ne pas poser (noeud ET) de façon contextuelle à l'état de l'environnement.

Un but élémentaire (122,124,125) ne peut plus être décomposé (raisonnablement) en sous-buts. Il ne peut être atteint que par l'éxécution d'une procédure (couche tâche). Lorsque plusieurs méthodes peuvent être envisagées pour atteindre un but élémentaire, les procédures qui décrivent ces méthodes seront rattachées à ce but élémentaire.

On remarquera que les couches du corpus de connaissances entretiennent des relations qui ont des propriétés intéressantes. Si on les range dans un ordre total (du haut vers le bas : stratégie, tâche, inférence, domaine) on s'aperçoit que les objets d'une couche font référence (par nom) aux objets de la même couche ou des couches inférieures, mais jamais aux objets des couches supérieures. Des propriétés intéressantes d'un modèle conceptuel sont réductibles à des propriétés du graphe des références entre objets conceptuels.

Un modèle conceptuel est connexe descendant si, pour chaque but, il existe au moins un chemin dans le graphe orienté des références partant du but en question et conduisant à une action. Un modèle conceptuel est connexe ascendant si pour chaque perception ou action il existe au moins un chemin dans le graphe orienté de références partant d'un but et conduisant à la perception/action en question.

Un modèle conceptuel est connexe s'il est connexe descendant et connexe ascendant.

Un modèle conceptuel est économique si, pour chaque objet du corpus de connaissances, il existe au moins un chemin dans le graphe non orienté des références entre un but et une perception/action passant par l'objet en question.

La propriété de connexion d'un modèle garantit que chaque but est "traité" et que chaque perception/action est utilisée. Elle ne garantit pas, évidemment, la complétude sémantique du corpus de connaissance ni la pertinence des références.

La propriété d'économie d'un modèle garantit l'absence d'objets conceptuels non utilisés. Le contrôle des propriétés de connexion et d'économie fait partie des activités de vérification et validation. La connexion est une mesure de conformité et de complétude alors que l'économie est intéressante surtout en termes de lisibilité et maintenabilité.

La structure de modèle d'expertise ainsi que la disponibilité d'objets conceptuels génériques constituent un guide pour le recueil et l'interprétation de l'expertise. Le problème qui se pose est de savoir comment attaquer la construction du modèle et la structure en couches du corpus de connaissances.
- De l'extérieur vers l'intérieur (outside-in), le corpus de connaissances est attaqué à partir des buts et des perceptions/actions. Une liste complète des buts externes est établie, ainsi que les perceptions/actions qui sont, à priori, à la disposition de l'agent rationnel. La modélisation continue en constituant l'arbre des buts et en définissant les sous-buts internes. Parallèlement on modélise les entités concrètes (objets des actions et des perceptions) ainsi que les relations et les fonctions dans lesquelles elles apparaissent. Les états évoqués dans le but donnent une première modélisation des entités abstraites. A partir de l'arbre des buts on définit des ébauches de procédures (couche tâche) et donc des opérateurs qui constituent les éléments de la couche inférence.
- de l'intérieur vers l'extérieur (inside-out) :
   Il s'agit de l'approche dite par modèles d'interprétation. Ayant identifié rapidement une ou plusieurs structures d'inférences génériques (diagnostic, planification,...), on les utilise comme guide pour construire les couches inférence et tâche. Le parcours est ensuite vers le haut (la couche stratégie) et le bas (la couche domaine), jusqu'aux buts externes et aux perceptions/actions.
- du haut vers le bas (top-down) :
   On part des buts du système et on descend tout au long des couches, en passant par l'arbre des sous-buts, la définition des procédures rattachées aux buts élémentaires, la définition des structures d'inférences et des opérateurs et par la suite des concepts et des relations qui typent les rôles. C'est une approche guidée par les traitements.
- du bas vers le haut (bottom-up) :
   On part de la description des concepts et relations du domaine et on remonte les couches jusqu'à la couche stratégie. C'est une approche guidée par les données.

Cette typologie est abstraite, au sens que chacune de ces approches, prise au pied de la lettre, n'est qu'une vue de l'esprit. Dans la réalité, la démarche réellement appliquée sera toujours mixte. La démarche plutôt outside-in est adaptée surtout aux problèmes nouveaux et difficiles, alors que la démarche plutôt inside-out (par modèles d'interprétation) est adaptée aux problèmes stéréotypes.

L'avantage de l'invention est de permettre l'adoption de n'importe quelle démarche et en cours de description du modèle de changer de démarche.

Ceci est permis par un environnement multi-fenêtres, à manipulation directe sur station de travail graphique. l'invention comporte des outils d'aide à l'organisation de l'encyclopédie de l'expertise et à la construction du modèle conceptuel.

Ainsi le logiciel offre la possibilité de manipuler les objets du modèle d'expertise grâce à des outils d'aide à l'édition, l'organisation, la consultation et la gestion.

Une première famille d'ensemble d'éditeurs graphiques permet d'afficher pour chaque objet conceptuel propre aux différentes couches du modèle, une fenêtre qui facilite et guide la saisie des propriétés de l'objet et des liens autorisés entre cet objet et les autres objets de la même couche ou des autres couches. Ainsi une première fenêtre (30) permet de décrire les fonctions (152) qui appartiennent au domaine (15). Cette fenêtre (30) fait figurer dans la bande menu, le nom de la fonction qui est entrée dans une première zone active (301) intitulée "Nom" (Name). Une deuxième zone active (302) de cette fenêtre (30) comporte un ascenseur (3020) qui permet lorsque cette zone est remplie de sélectionner un des arguments (parameters) rentré dans cette deuxième zone (302) pour par exemple, à l'aide du pavé (3021) "enlève" (remove) de supprimer le paramètre sélectionné, ou à l'aide du pavé "ajoute" (3022) ajouter un argument à l'emplacement pointé. Une troisième zone active (303) "résultat" (result) permet à l'opérateur d'inscrire le résultat correspondant à la fonction qu'il est en train de préciser. Ainsi si l'on se réfère à la fonction "durée" (152) de l'annexe 3, ce pavé (303) comportera l'information "entier". Ensuite une dernière zone active (304) "description" permet à l'utilisateur de rentrer la description de la fonction au clavier. Un pavé "Annule" (305) permet lors de son activation d'annuler la manoeuvre effectuée sur la fenêtre (30), un pavé (306) "mise à jour" permet lors de son activation de mettre à jour le contenu de la mémoire en fonction des informations entrées au clavier dans la ou les différentes zones actives, et d'éditer les liens entre les différents objets du modèle, en faisant apparaître dans les autres objets les liens que l'objet décrit peut avoir avec les objets déjà décrits. Un pavé "Plus" (307) permet d'étendre l'affichage de la fenêtre à d'autres informations complémentaires, comme on le verra ci-après en liaison avec la fenêtre relation. Enfin les pavés (309) regroupent les fonctions "guide", "bibliothèque" et "sortie de l'éditeur de fonction" (30).

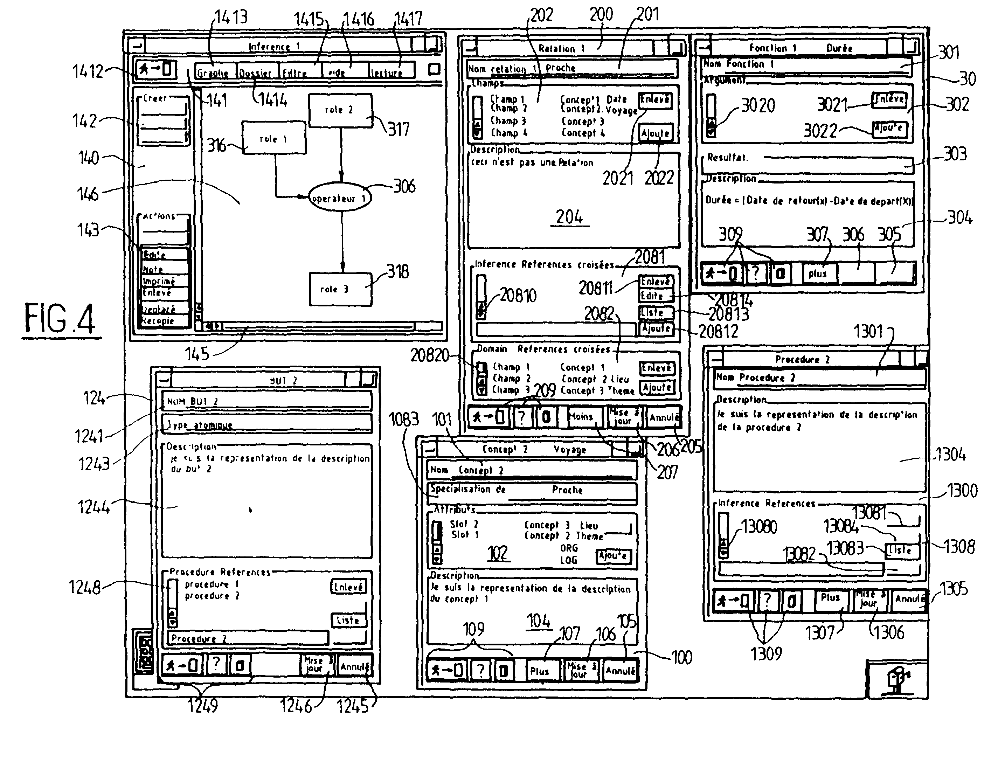

Une deuxième fenêtre (200) permet d'éditer les relations (151) de la couche domaine (15). Cette fenêtre comprend des zones actives identiques (201,202,204) aux zones actives (301,302,304) de la fenêtre fonction. La zone active (202) permettant de décrire les champs de chaque relation et de désigner les concepts attachés à ces champs. La fenêtre comprend dans sa zone active (201) la désignation de la relation "proche" (21, annexe 2) qui est constituée des champs "date" (16, annexe 1) et "voyage" (11, annexe 1) lesquels sont des concepts qui seront décrits chacun dans une fenêtre respective d'édition des concepts (100). De même le pavé actif (205) permet d'annuler ce qui a été écrit dans les zones actives de la fenêtre (200), le pavé (206) permet de mettre à jour le contenu de la mémoire et les liens entre les différents objets des différentes couches, le pavé "moins" (2080) permet de réduire la fenêtre à la dimension minimale constituée par l'affichage des zones actives "Menu" (200), "Nom" (201), "Champs" (202), "description" (204). Dans son affichage étendu, commandé par l'actionnement d'un bouton "Plus" (207), la fenêtre relation (200) comme représentée sur la figure 4, comporte une zone active (2081) comportant les références croisées avec les inférences. Un ascenseur (20812) permet dans cette zone active "références croisées d'inférences" (2081) de sélectionner un emplacement et des pavés "enlève" (20811), et "ajoute" (20812) permettent respectivement d'enlever ou d'ajouter les références croisées avec les inférences. Un pavé "Liste" (20813) permet de lister et d'afficher les inférences du modèle, un pavé "Edite" (20814) permet d'éditer l'inférence sélectionnée par l'ascenseur (20810) et de passer ainsi directement à l'affichage d'une fenêtre (140) permettant d'éditer l'inférence sélectionnée dans la zone active des "références croisées d'inférence" contribuant à la description de la relation en cours d'affichage. De même une zone active supplémentaire (2082) permet de désigner les références croisées avec les domaines, et d'indiquer aux emplacements sélectionnés par l'ascenseur (20820) le concept à ajouter ou à enlever de cette description. Ainsi cette zone active (2082)permet d'établir les liens entre la relation et les concepts du domaine, alors que la zone active précédente (2081) permet d'établir les liens avec les structures d'inférences de la couche d'inférence. Là encore, dans cette fenêtre de description d'une relation du modèle, l'addition ou la suppression d'une inférence ou d'un domaine déclenche après sélection du pavé "mise à jour" (206) la mise à jour automatique des liens qui peuvent apparaître dans les inférences ou les domaines liés à cette relation.

Une troisième type de fenêtre (100) permet d'éditer les concepts du domaine. Ce troisième type de fenêtre (100) est constitué de la même façon que les fenêtres fonctions (30) et relation (200), de trois zones actives , une première zone (101) permettant d'inscrire le nom du concept, une deuxième (102) permettant de définir les attributs à ajouter ou à oter au concept et une troisième (104) de définir la description du concept. La zone active "attributs" (102) comporte comme pour les zones "champs" (202) et "argument" (502), un ascenseur (1020) et les pavés "enlève" (1021) et "ajoute" (1022). Les pavés d'activation (105,106,107) ont des fonctions identiques aux fonctions des pavés d'activation (305 à 407) et les pavés (109) des fonctions identiques aux pavés d'activation (209,309).

Un quatrième type de fenêtre (130) permet la description des procédures de la couche tâche. Cette fenêtre comporte comme pour les fenêtres précédentes des zones actives (1301) de définition du nom de la procédure, (1304) de description de la procédure, (1305) d'annulation des informations rentrées, (1306) de mise à jour des données et des liens associés à la procédure, (1307) d'agrandissement des informations affichées par la fenêtre et les pavés (1309) permettant d'afficher la fonction "guide", la bibliothèque ou de sortir de cet éditeur. En outre, cette fenêtre de procédure (130) comporte une zone active (1308) qui permet d'afficher les références des inférences auxquelles ces procédures font appel et par la fonction "édite" (13084) d'éditer le graphe d'inférence correspondant. Cette zone active comporte également comme dans la zone active (2081) de la fenêtre relation, un pavé d'activation "enlève" (13081) pour oter une référence à une inférence, un pavé "Liste" (13083) pour lister les inférences, (13082) pour ajouter une inférence à la position désignée par la flèche ascenseur (13080).

De même la cinquième fenêtre but (124) comporte les zones actives (124) pour désigner le nom du but, (1244) pour effectuer la description de ce but, (1243) pour désigner le type du but et (1248) pour désigner les procédures auxquelles ce but peut être lié. La zone active (1248) est du même type que la zone active (1308) de la fenêtre de procédure (130). De même cette fenêtre but comporte les pavés (1245) d'annulation, (1246) de mise à jour et les pavés (1249) permettant les mêmes fonctions que les pavés (309).

Une sixième fenêtre d'édition d'inférence (140) comporte une barre menu (141) permettant par un pavé activable (1412) de sortir de l'éditeur par un pavé activable "graphe" (1413) de créer un graphe, par un pavé "dossier (1414) de visualiser les dossiers d'inférences, par un pavé "filtre" (1415) de filtrer..., par un pavé "aide" (1416) de guider l'utilisateur et par un pavé "balayage" (1417) d'effectuer un balayage de l'inférence. Cette fenêtre comporte une deuxième zone active (142) qui comprend un pavé de création qui permet d'effectuer la création d'un nouveau graphe d'inférence et une troisième zone active action (143) qui comprend les pavés classiques d'édition, d'impression, de déplacement, d'enlèvement et de duplication ainsi qu'un pavé note permettant d'associer des notes à un opérateur ou à un rôle. Des ascenseurs (144,145) permettent les déplacements et/ou des agrandissements de la fenêtre principale (146). Dans la fenêtre (146) apparait le graphe créé pour l'inférence considérée. Ainsi, si l'on prend le graphe d'inférence représenté à la figure 3, la fenêtre (146) peut correspondre à la description de l'opérateur (306) "vérifier les contraintes", le rôle 1 (316) au concept "produit-candidat", le rôle 2 "contrainte-client" (317) étant du type concept "contrainte", le rôle 3 "produit-optimal" (318) étant du type concept "produit".

Les zones (141, 142, 143, 144, 145) de la fenêtre inférence sont du même type que les zones des fenêtres racines (51 à 54) qui permettent de définir les graphes d'inférences (5188) pour chacune des inférences qui permettent de définir les graphes de buts, (526) pour chacun des buts définis pour le modèle, les graphes de procèdure (5300) pour la fenêtre racine de procèdure (53) et les domaines pour la fenêtre (54)..

Ces fenêtres permettent également d'afficher et d'appeler les fichiers de stratégie dans la fenêtre racine buts (52). Les fichiers d'inférences (517) dans la fenêtre racine inférence (51), idem pour la fenêtre racine de procédure (53), qui permet de définir les graphes d'appel de procédure, (5300) pour la procédure 1, (5301) pour la procédure 2, (5302) pour la procédure 3. Une dernière fenêtre racine (54) permet de rassembler dans sa zone centrale (546) et de visualiser les différents objets "concepts", "fonction", "relation" qui constituent le domaine de l'expertise ainsi que les différents fichiers du domaine. Cette fenêtre comporte également les différentes zones d'activation permettant de tracer soit des graphiques, soit d'éditer, soit d'imprimer ou de créer de nouveaux objets appartenant au domaine.

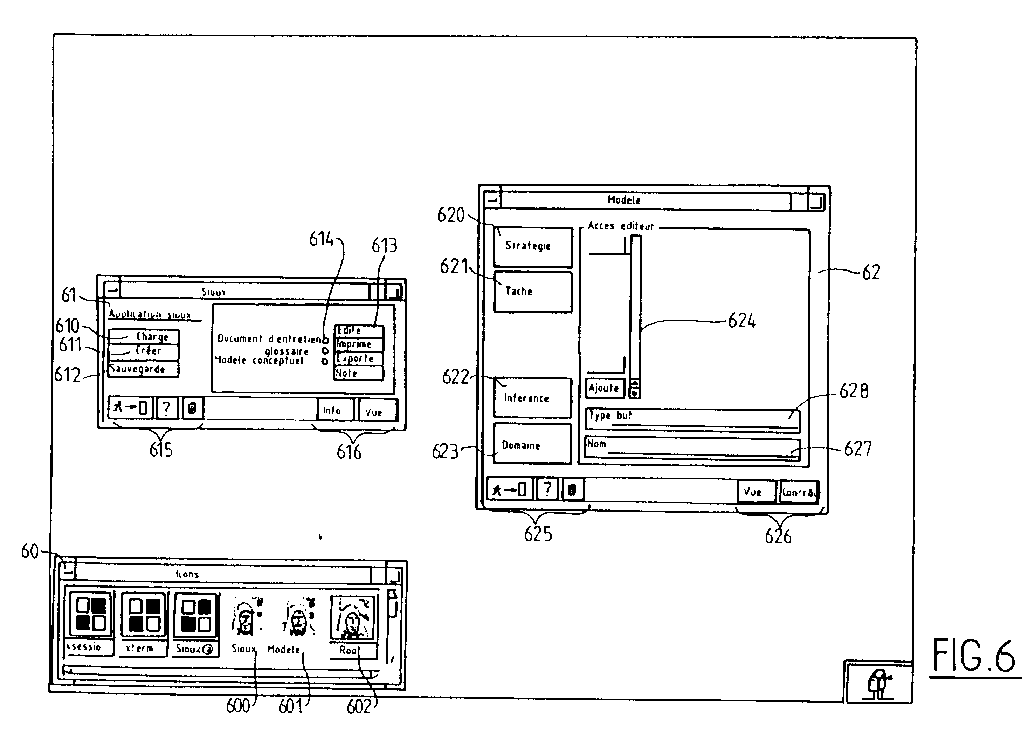

Enfin le logiciel comporte à sa mise en route l'affichage d'une icône (60) représentée à la figure 6 qui permet d'appeler par l'icône (600) la fenêtre (61), par l'icône (601) la fenêtre "modèle" (62) et par l'icône (602) les fenêtres apparaissant sur les figures 5. La fenêtre d'entrée (61) dans le logiciel permet par les pavés (610) chargement, (611) création, (612) sauvegarde, de définir l'opération à effectuer et par les boutons radios (614) de définir l'objet sur lequel va s'effectuer l'opération s'il s'agit d'un glossaire, d'un modèle conceptuel ou de documents d'entretien pour constituer le modèle d'expertise. Les pavés (613) d'édition, d'impression, d'export et de note permettent d'effectuer les opérations ci-dessus sur l'un des objets de la fenêtre.

Enfin cette fenêtre est complétée par les pavés (615) qui ont les mêmes fonctions que les pavés (309), et par les pavés (616) qui permettent d'obtenir des informations ou une visualisation des éléments désignés par les boutons radios. La fenêtre modèle (62) comporte quatres pavés associés chacun à une couche du modèle, (620) pour la stratégie, (621) pour la tâche, (622) pour l'inférence, (623) pour le domaine et qui permettent d'accéder à l'une de ces couches du modèle d'expertise.

Une zone active (628) permet de définir le type de l'éditeur d'objet que l'opérateur appelle sur la fenêtre dans la couche définie par les pavés (620 à 623), la zone (627) définit le nom de l'objet et le curseur d'ascenseur (624) permet de définir l'emplacement dans lequel l'objet sera ajouté. Enfin les pavés (625 et 626) ont des fonctions identiques aux pavés (615,616).

La fonction glossaire représentée sur la fenêtre (61) permet après avoir chargé un document d'entretien par la sélection du premier bouton radio (document d'entretien) et après la sélection de la zone active "chargement" (load) (610) de sélectionner par le deuxième bouton radio de la fenêtre (61) la fonction "glossaire" et d'activer le pavé création (611) . Cette dernière opération fait apparaître une fenêtre "glossaire", tandis que la première fait apparaitre une deuxième fenêtre dans laquelle apparait le document d'entretien. La souris ou tout autre moyen permet de déplacer un curseur qui vient mettre en surbrillance un mot que l'on veut sélectionner. Une zone active "Exporte" de la fenêtre "document d'entretien" permet de transférer le mot sélectionné dans la fenêtre glossaire. Ce mot apparait alors dans la fenêtre glossaire, à l'emplacement désigné par le curseur de la flèche ascendante. De cette façon, le logiciel associé au système permet de définir les glossaires nécessaires à la définition du modèle conceptuel et ensuite de définir le modèle.

Lors des étapes de définition du modèle ou à chaque mise à jour du modèle, lorsque l'opérateur introduit un nouvel objet, par exemple un rôle nouveau dans un graphe d'inférence, après que l'opérateur ait validé l'opération sur le graphe d'inférence, le logiciel va rechercher dans les fichiers des différents objets dépendant du graphe d'inférence et du nouveau rôle défini les références et mémorise celles-ci dans cette subdivision de mémoire qui sert à cette mémorisation. Par la suite, lors de l'appel d'une fenêtre d'un objet lié à l'objet qui vient d'être rajouté, l'affichage affichera directement le lien avec le nouvel objet rajouté. Par exemple, si l'on crée une relation et on spécifie les type de ses champs par des concepts, si la fenêtre concept relative est affichée, la relation apparait automatiquement dans la zone reférencée croisées de cette fenêtre. La famille de fonctions réalisées par le logiciel que l'on vient de décrire permet de gérer les liens de traçabilité en mémorisant et parcourant les liens existants dans le modèles conceptuels. Les objets du modèle sont rangés dans des modules. Pour référencer à l'intérieur d'un module les objets d'un autre module, il faut importer le module en question.

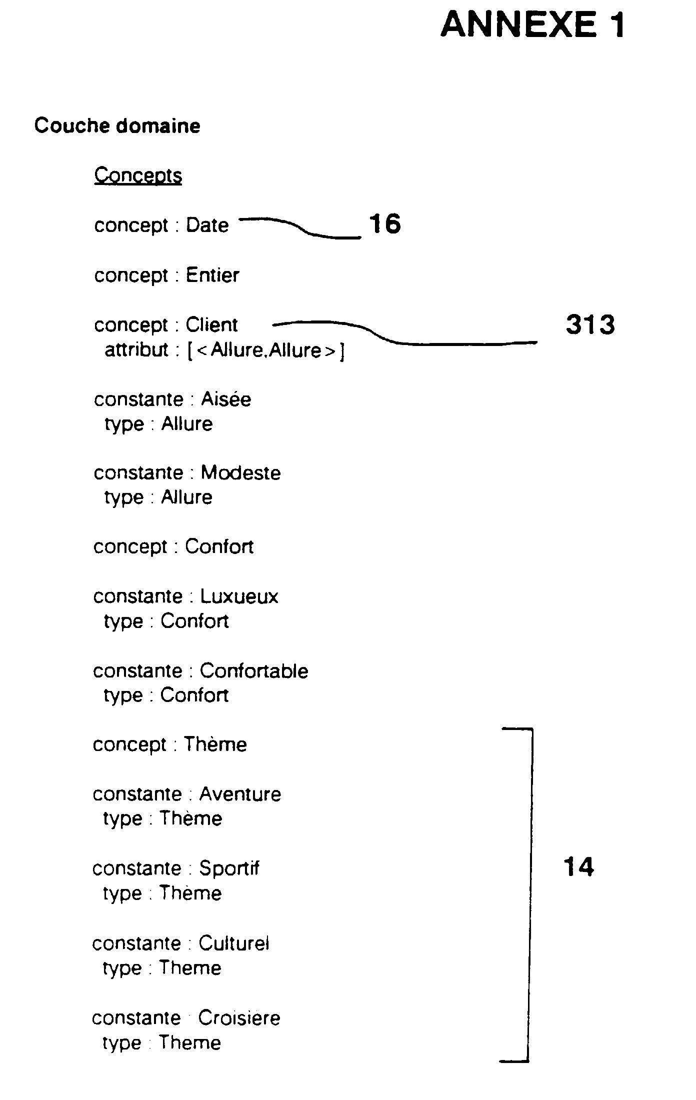

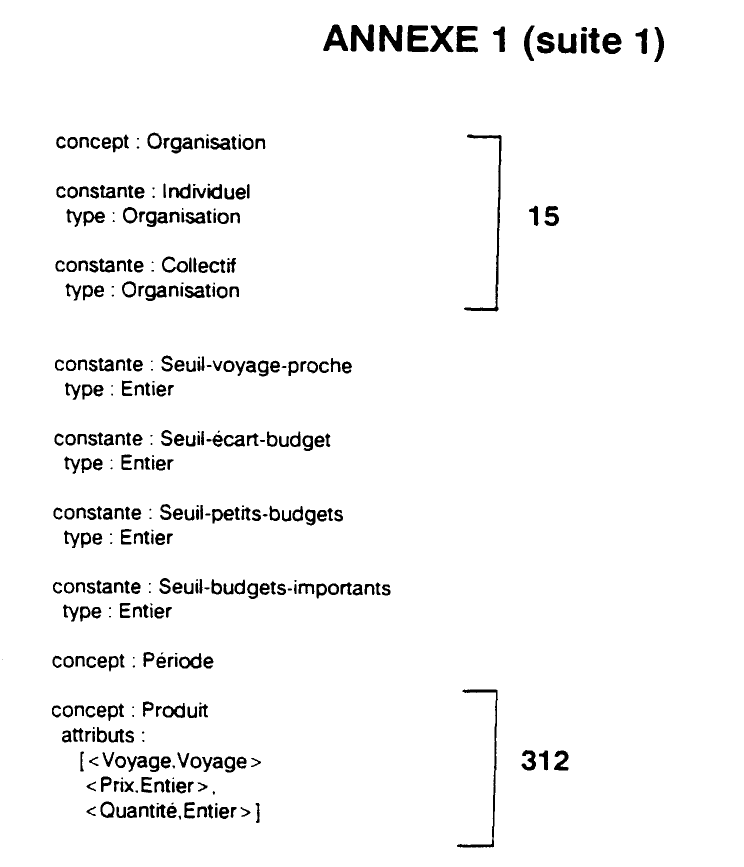

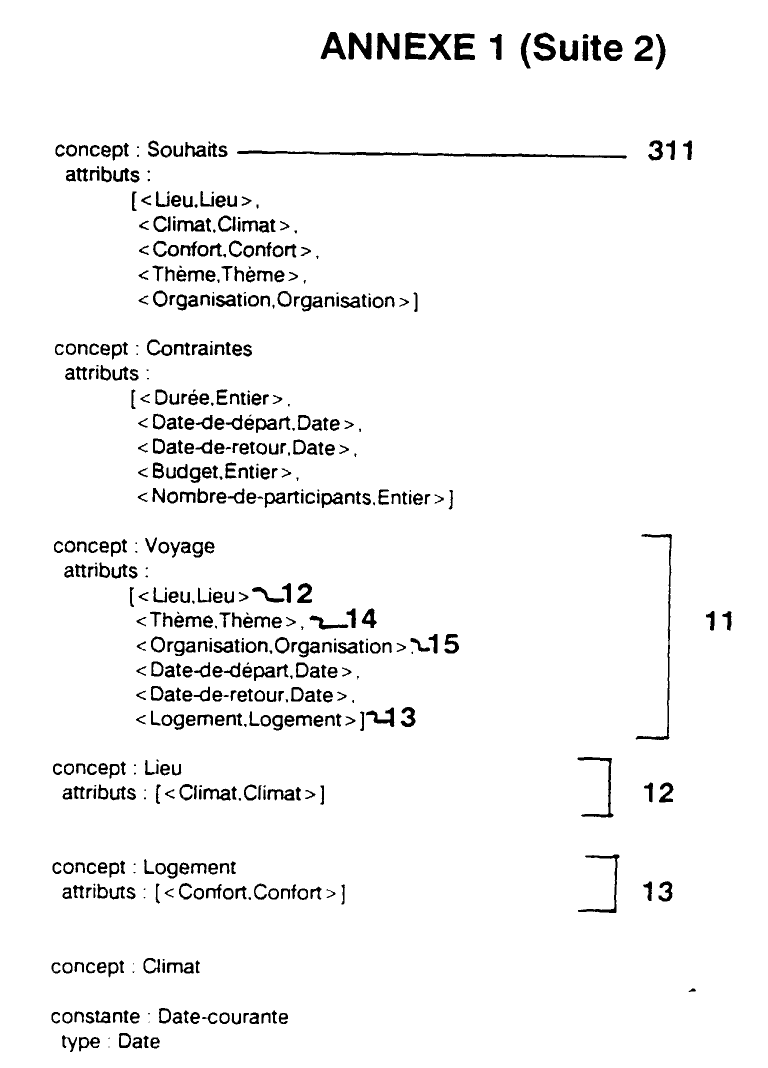

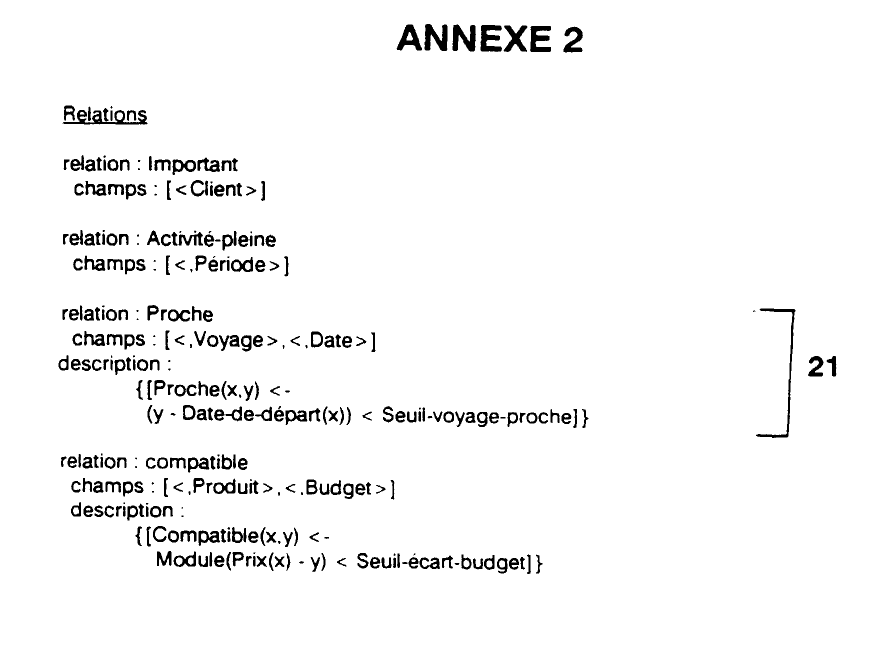

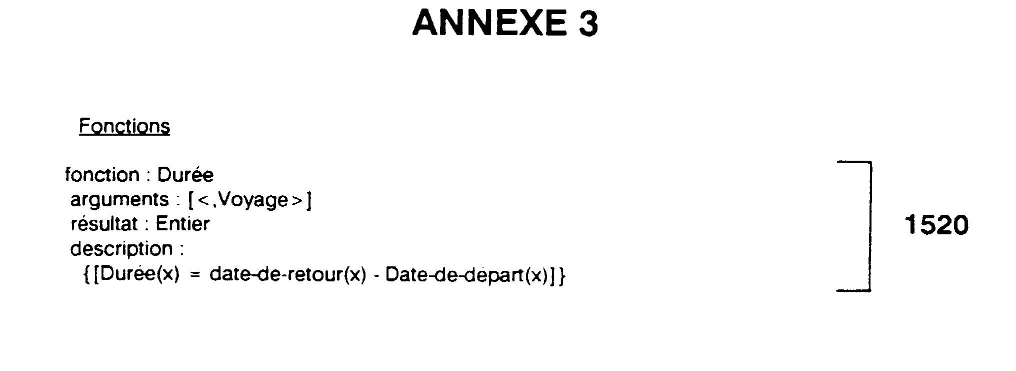

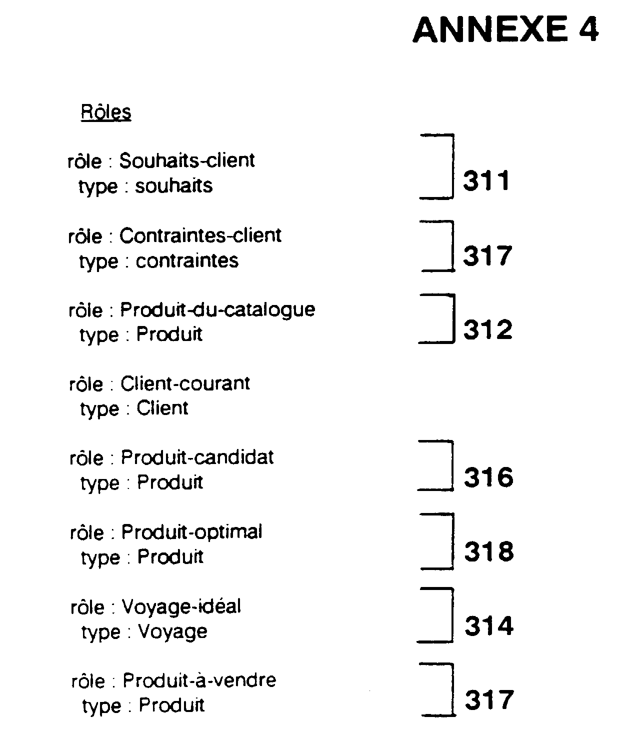

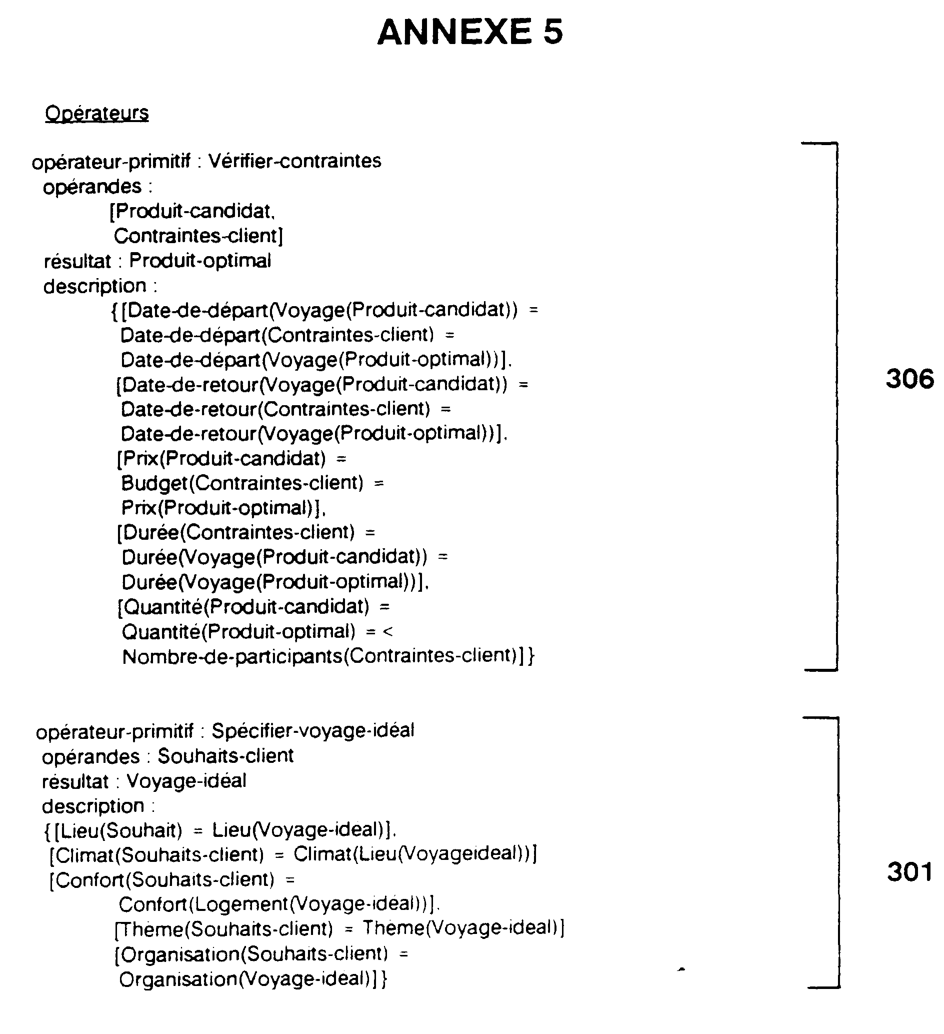

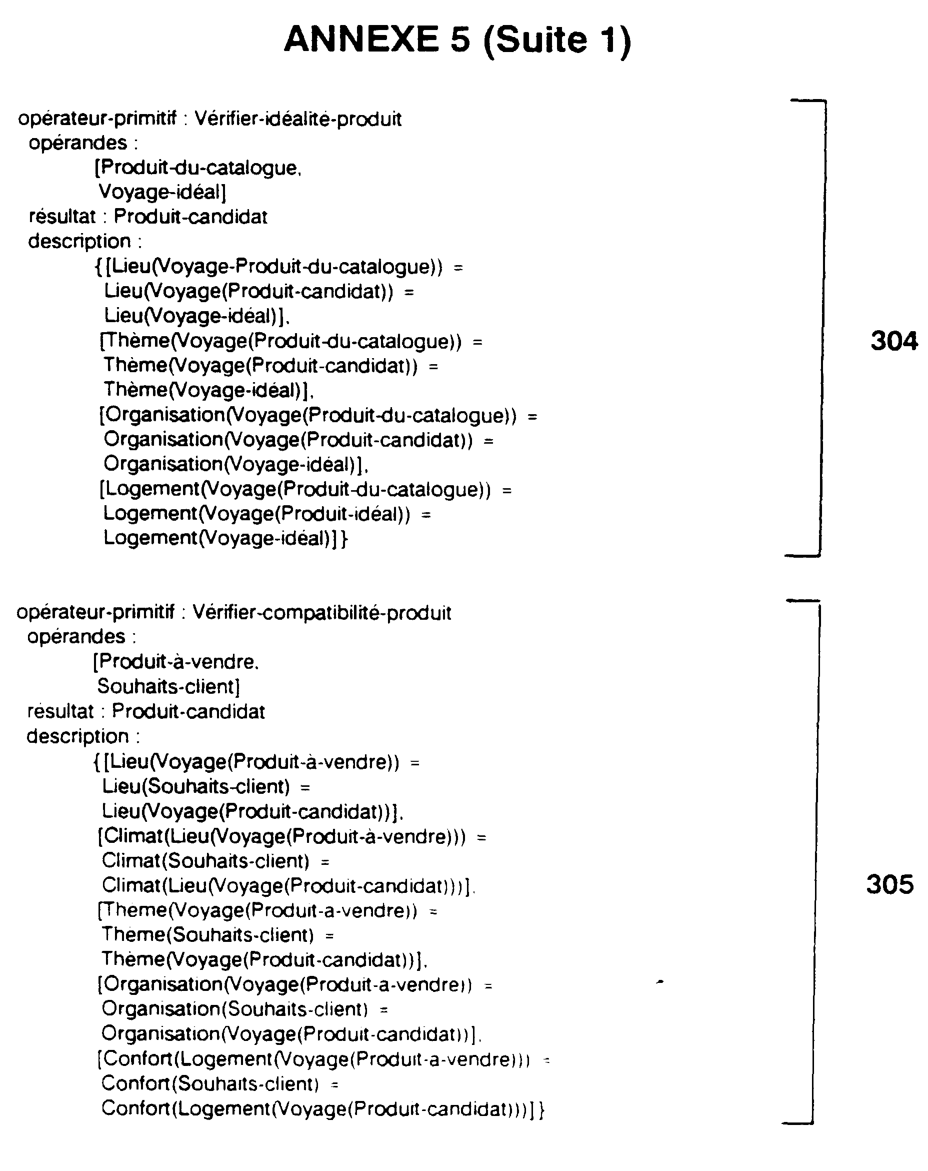

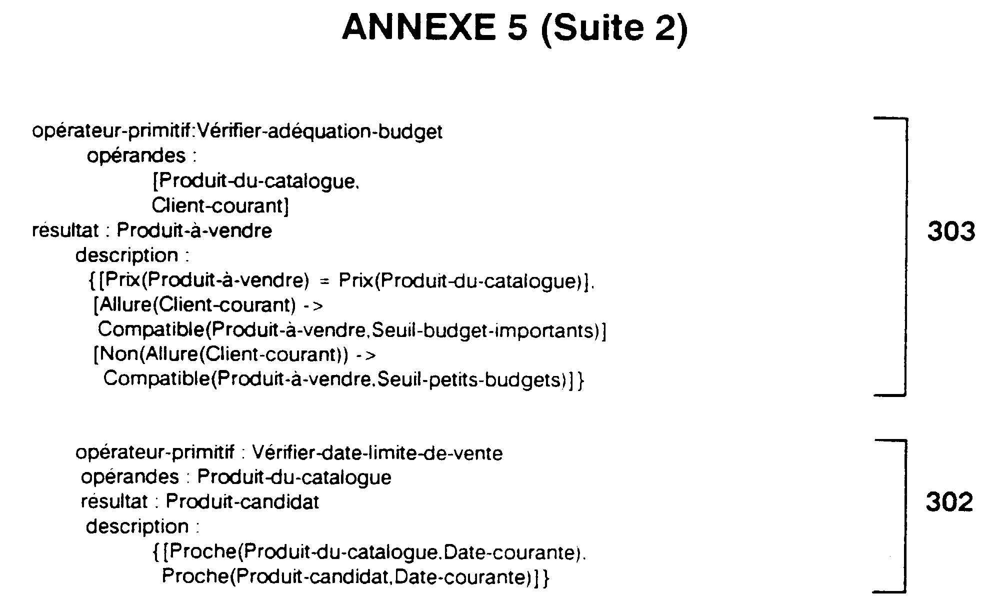

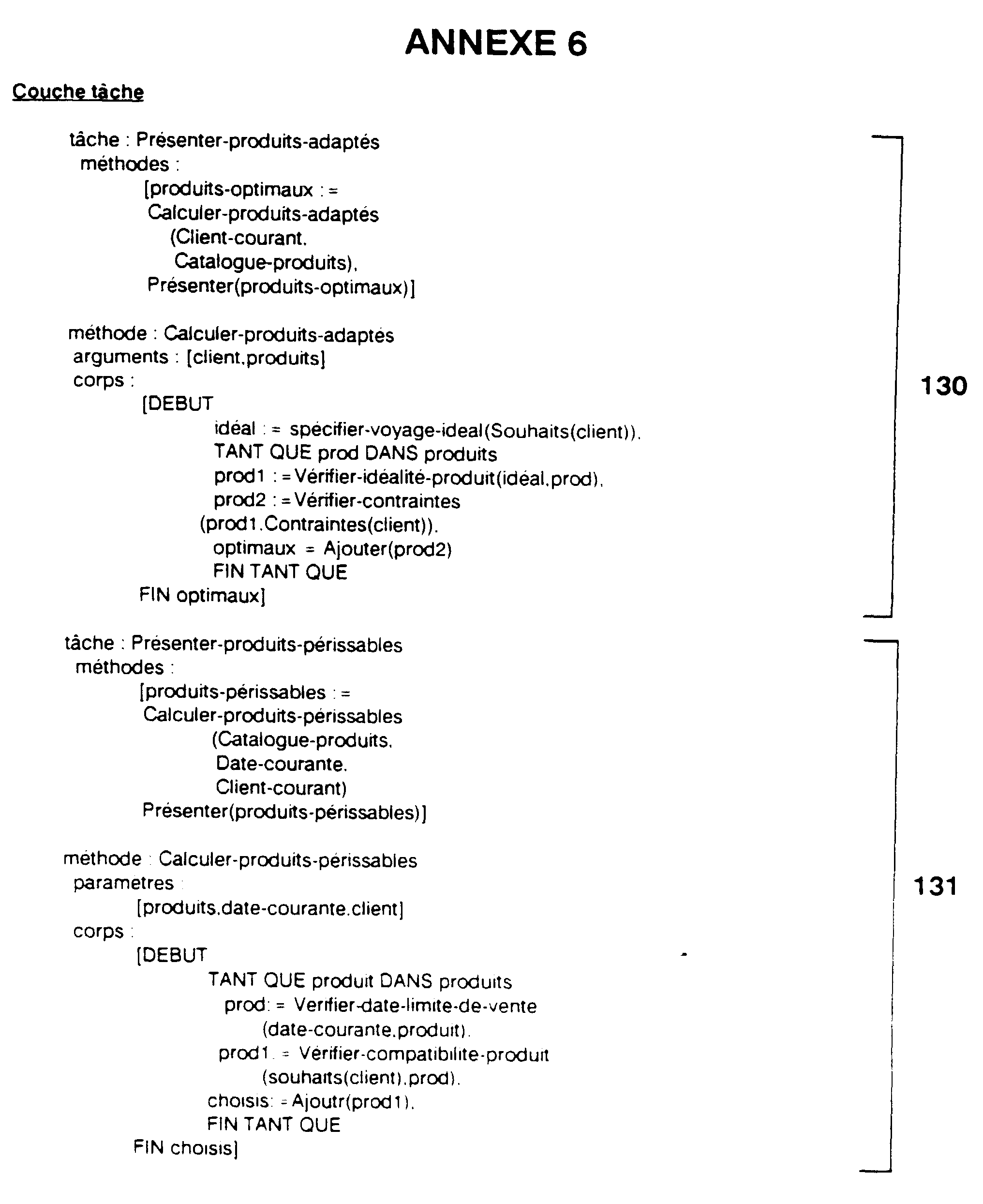

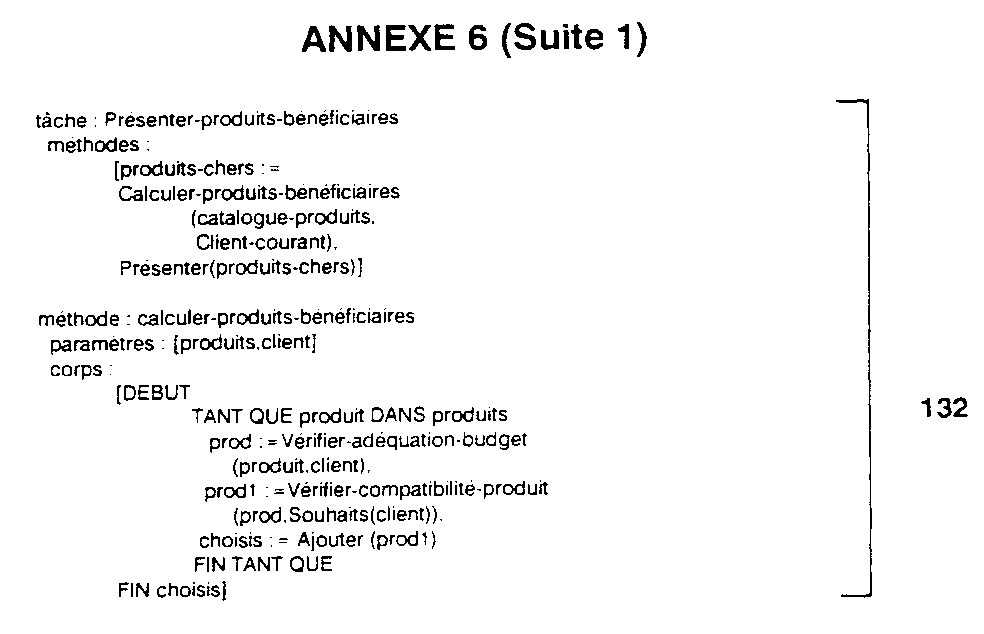

## Revendications

1. Procédé de modélisation conceptuelle d'expertise sur un système informatique pourvu d'une unité centrale, d'une mémoire centrale et d'un dispositif d'affichage travaillant en mode graphique multi-fenêtres, chaque fenêtre étant munie d'un système de coordonnées locales et d'un moyen de pointer dans une fenêtre au moins une zone active susceptible de réagir à au moins une unité d'information constituée par un événement extérieur, la dite zone active étant associée à un ensemble de premières fonctions appelées éditeurs comportant au moins une deuxième fonction de réaction à une activation,
le procédé étant caractérisé en ce qu'il consiste à associer au moins une fenêtre à un nombre prédéfini d'objets conceptuels constitutifs d'un corpus de connaissance organisé sur quatres couches de modélisation de l'expertise,à savoir une première couche stratégie, une deuxième couche tâche, une troisième couche inférence et une quatrième couche domaine, chaque fenêtre permettant l'affichage, l'édition et la sauvegarde de connexions entre ces objets conceptuels et permettant la mise à jour automatique des liens des objets conceptuels par la mise à jour ou la modification d'un objet conceptuel.

2. Procédé selon la revendication 1 caractérisé en ce que les objets conceptuels sont constitués de relations, concepts, constantes, opérateurs, rôles, structures d'inférence, tâches, buts.

3. Procédé selon la revendication 2 caractérisé en ce qu'il comporte une étape de commande de l'affichage d'une fenêtre de création d'un glossaire qui sert à définir par la suite les objets à décrire.

4. Procédé selon la revendication 3 caratérisé en ce que la création du glossaire comporte les étapes suivantes :
- affichage d'une fenêtre glossaire et d'une fenêtre base de données hiérarchisées dans laquelle les connaissances documentées rentrées en mémoire sont affichées,
- sélection de l'option créer un mot, mise en surbrillance d'un fragment de texte sélectionné dans la fenêtre associée à un texte de la base de données hiérarchisée, en vue du transfert vers le glossaire,
- transfert du mot vers le glossaire par sélection d'une flèche de transfert,
- édition des liens entre le glossaire et les connaissances documentées.

5. Procédé selon la revendication 1 ou 3 caractérisé en ce que chaque fenêtre comporte comme zone active un pavé "plus" permettant d'étendre le nombre de champs d'informations présentés sur la fenêtre.

6. Procédé selon l'une quelconque des revendications précédentes caractérisé en ce qu'il comporte, pour chaque fenêtre, une étape d'affichage d'un champ indiquant les liens d'un objet avec les autres objets, et permettant la création des liens d'un objet avec les autres objets.

7. Procédé selon l'une quelconque des revendications précédentes caractérisé en ce que chaque fenêtre comporte comme zone active un pavé "moins" permettant de restreindre la dimension de la fenêtre et les informations affichées dans celle-ci aux informations essentielles.

8. Procédé selon l'une quelconque des revendications 1 à 7, caractérisé en ce que les objets conceptuels de la couche domaine sont constitués de concepts, relations et fonctions et sont référencés par les couches inférence, tâche et stratégie.

9. Procédé selon l'une quelconque des revendications 1 à 8, caractérisé en ce que les objets conceptuels de la couche inférence sont constitués de structures d'inférences, d'opérateurs et de rôles.

10. Procédé selon l'une quelconque des revendications 1 à 9, caractérisé en ce que les objets conceptuels de la couche tâche sont constitués de procédures.

11. Procédé selon l'une quelconque des revendications 1 à 10, caractérisé en ce que les objets conceptuels de la couche stratégie sont constitués de buts.

## Patentansprüche

1. Verfahren zur konzeptuellen Expertisenmodellierung in einem Datenverarbeitungssystem, das versehen ist mit einer Zentraleinheit, einem Hauptspeicher und einer Anzeigevorrichtung, die im Mehrfenster-Graphikmodus arbeitet, wobei jedes Fenster mit einem System lokaler Koordinaten und mit einem Mittel zum Zeigen auf wenigstens eine aktive Zone in einem Fenster, die auf wenigstens eine durch ein äußeres Ereignis gebildete Informationseinheit reagieren kann, versehen ist, wobei der aktiven Zone eine Gesamtheit erster Funktionen zugeordnet ist, die Editoren genannt werden und wenigstens eine zweite Funktion zur Reaktion auf eine Aktivierung enthalten,
wobei das Verfahren dadurch gekennzeichnet ist, daß es darin besteht, wenigstens einem Fenster eine im voraus definierte Anzahl von konzeptuellen Objekten zuzuordnen, die einen Wissenskorpus bilden, der in vier Expertisenmodellierungsschichten organisiert ist, nämlich einer ersten Strategieschicht, einer zweiten Task-Schicht, einer dritten Schlußfolgerungsschicht und einer vierten Domänenschicht, wobei jedes Fenster die Anzeige, die Editierung und die Sicherung von Verbindungen zwischen diesen konzeptuellen Objekten ermöglicht und die automatische Aktualisierung der Verbindungsglieder der konzeptuellen Objekte durch die Aktualisierung oder die Modifizierung eines konzeptuellen Objekts ermöglicht.

2. Verfahren nach Anspruch 1, dadurch gekennzeichnet, daß die konzeptuellen Objekte aus Relationen, Begriffen, Konstanten, Operatoren, Rollen, Schlußfolgerungsstrukturen, Tasks, Zielen gebildet sind.

3. Verfahren nach Anspruch 2, dadurch gekennzeichnet, daß es einen Schritt zum Steuern der Anzeige eines Fensters für die Erzeugung eines Glossars, das der anschließenden Definition der zu beschreibenden Objekte dient, enthält.

4. Verfahren nach Anspruch, dadurch gekennzeichnet, daß die Erzeugung des Glossar die folgende Schritte enthält:
- Anzeigen eines Glossarfensters und eines Datenbankfensters für hierarchisierte Daten, in dem das im Speicher angetroffene dokumentierte Wissen angezeigt wird,
- Wahl der Option des Erzeugens eines Worts, Hervorheben eines ausgewählten Texts in dem einem Text der hierarchisierten Datenbank zugeordneten Fenster, um es an das Glossar zu übertragen,
- Übertragen des Wortes an das Glossar durch Wahl eines Übertragungspfeils,
- Editieren der Bindeglieder zwischen dem Glossar und dem dokumentierten Wissen.

5. Verfahren nach Anspruch 1 oder 3, dadurch gekennzeichnet, daß jedes Fenster als aktive Zone einen Schalter "mehr" enthält, der es ermöglicht, die Anzahl der in dem Fenster dargestellten Informationenfelder zu erhöhen.

6. Verfahren nach einem der vorangehenden Ansprüche, dadurch gekennzeichnet, daß es für jedes Fenster einen Schritt der Anzeige eines Feldes enthält, das die Bindeglieder eines Objekts mit den anderen Objekten angibt und die Erzeugung von Bindegliedern eines Objekts mit den anderen Objekten ermöglicht.

7. Verfahren nach einem der vorangehenden Ansprüche, dadurch gekennzeichnet, daß jedes Fenster als aktive Zone einen Schalter "weniger" enthält, der es ermöglicht, eine Beschränkung der Abmessung des Fensters sowie der darin angezeigten Informationen auf die wesentlichen Informationen vorzunehmen.

8. Verfahren nach einem der Ansprüche 1 bis 7, dadurch gekennzeichnet, daß die konzeptuellen Objekte der Domänenschicht aus Begriffen, Beziehungen und Funktionen gebildet sind, wobei auf sie durch die Schlußfolgerungs-, Task- und Strategieschichten Bezug genommen wird.

9. Verfahren nach einem der Ansprüche 1 bis 8, dadurch gekennzeichnet, daß die konzeptuellen Objekte der Schlußfolgerungsschicht aus Schlußfolgerungs-, Operatoren- und Rollenstrukturen gebildet sind.

10. Verfahren nach einem der Ansprüche 1 bis 9, dadurch gekennzeichnet, daß die konzeptuellen Objekte der Task-Schicht aus Prozeduren gebildet sind.

11. Verfahren nach einem der Ansprüche 1 bis 10, dadurch gekennzeichnet, daß die konzeptuellen Objekte der Strategieschicht aus Zielen gebildet sind.

## Claims

1. Method for conceptual modelling of expertise on a computer system provided with a central processing unit, a central memory and a display device working in multi-windows graphics mode, each window being provided with a system of local co-ordinates and a means for pointing, within a window, to at least one active zone capable of reacting with at least one unit of information constituted by an external event, said active zone being associated with a set of first functions called editors comprising at least a second function of reacting to activation,
the method being characterised in that it consists in associating at least one window with a predefined number of conceptual objects constituting a corpus of knowledge organised in four expert modelling layers, namely a first strategy layer, a second task layer, a third inference layer and a fourth domain layer, each window permitting the display, editing and saving of connections between these conceptual objects and allowing the automatic updating of the links of the conceptual objects by updating or modifying a conceptual object.

2. Method according to Claim 1 characterised in that the conceptual objects are constituted by relations, concepts, constants, operators, roles, inference structures, tasks, goals.

3. Method according to Claim 2 characterised in that it comprises a command step for the display of a glossary creation window, which serves to define subsequently the objects to be described.

4. Method according to Claim 3 characterised in that the creation of the glossary comprises the following steps:
- display of a glossary window and a multi-level database window displaying the documented knowledge entered in the memory,
- selection of the create a word option, highlighting of a fragment of selected text in the window associated with a text from the multi-level database, with a view to transfer to the glossary,
- transfer of the word to the glossary by selecting a transfer arrow,
- editing the links between the glossary and the documented knowledge.

5. Method according to Claim 1 or 3 characterised in that each window has as an active zone a "plus" block making it possible to extend the number of information fields shown in the window.

6. Method according to any one of the preceding claims characterised in that it comprises, for each window, a step of displaying a field indicating the links between one object and the other objects, and permitting the creation of links between one object and the other objects.

7. Method according to any one of the preceding claims, characterised in that each window has as an active zone a "minus" block making it possible to restrict the size of the window and the information displayed therein to the essential information.

8. Method according to any one of Claims 1 to 7, characterised in that the conceptual objects of the domain layer are constituted by concepts, relations and functions and are referenced by the inference, task and strategy layers.

9. Method according to any one of Claims 1 to 8, characterised in that the conceptual objects of the inference layer are constituted by inference, operator and role structures.

10. Method according to any one of Claims 1 to 9, characterised in that the conceptual objects of the task layer are constituted by procedures.

11. Method according to any one of Claims 1 to 10, characterised in that the conceptual objects of the strategy layer are constituted by goals.
